# EUROPÄISCHE PATENTSCHRIFT

(11) **EP 1 321 392 B1**
(45) Veröffentlichungstag und Bekanntmachung des Hinweises auf die Patenterteilung: **20.10.2004**
(21) Anmeldenummer: 01130549.7
(22) Anmeldetag: 21.12.2001
(51) Int. Cl.: B65G 43/00, B65G 13/00

(54) **Förderanlage zum Transport von Gegenständen**
Conveyor system for transporting goods
Système de convoyeur pour le transport de marchandises

(43) Veröffentlichungstag der Anmeldung: 25.06.2003
(73) Patentinhaber: EISENMANN MASCHINENBAU KG (Komplementär: EISENMANN-Stiftung), 71032 Böblingen (DE)
(72) Erfinder: Swoboda, Werner, Dr., 71032 Böblingen (DE)
(74) Vertreter: Ostertag, Ulrich, Dr.

(56) Entgegenhaltungen:
- WO-A-97/09258
- DE-A- 19 944 896

## Beschreibung

Die Erfindung betrifft eine Förderanlage zum Transport von Gegenständen mit
a) einem mechanischen Fördersystem, welches die Gegenstände auf einem Wegesystem bewegt;
b) einer Mehrzahl von Sensoreinrichtungen, die ihrerseits aufweisen:
   ba) mindestens einen Sensor, der einen in seiner Umgebung vorliegenden physikalischen Parameter erfaßt;
   bb) eine Schaltungsanordnung, welche die vom Sensor gelieferten Signale in verarbeitbare elektrische Signale umsetzt;
c) einer Mehrzahl von Aktoren, insbesondere Motoren;
d) einer Zentralsteuerung, welcher die von den Sensoreinrichtungen erzeugten Signale zugeführt werden und welche danach die Aktoren steuert,
wobei
e) mindestens eine der Sensoreinrichtungen als Funksensoreinrichtung ausgestaltet ist und hierzu einen Sender, einen Empfänger und eine Stromversorgungsquelle aufweist;
f) die Zentralsteuerung mit mindestens einer Sende/ Empfangseinrichtung in Datenverbindung steht, welche mit dem Sensor und dem Empfänger jeder Sensoreinrichtung über Funk kommuniziert.

In Förderanlagen müssen häufig verschiedene physikalische Parameter erfaßt werden, nach denen die Förderanlage gesteuert wird. Als solcher physikalischer Parameter kommt insbesondere die Anwesenheit eines geförderten Gegenstands an einer bestimmten Stelle in Betracht. So müssen beispielsweise Hubstationen in Funktion gesetzt werden, wenn der Gegenstand eine bestimmte Position erreicht hat; Weichen müssen gestellt werden, Antriebsmotoren für einen bestimmten Förderabschnitt müssen ein- und ausgeschaltet werden oder sonstige Vorgänge sind einzuleiten. Zu diesem Zweck werden z.B. als "Initiatoren" bezeichnete Sensoreinrichtungen eingesetzt, welche Sensoren enthalten, die auf den fraglichen überwachten physikalischen Parameter ansprechen und bestimmte Funktionen der Steuerung auslösen. Bekannte derartige Sensoreinrichtungen erhalten die zu ihrem Betrieb erforderliche elektrische Energie über Versorgungskabel zugeleitet; auch die von ihnen erzeugten Signale werden über elektrische Leitungen zu einer Zentralsteuerung abgeführt, welche die Gesamtanlage nach diesen Signalen steuert. Da bei großen Förderanlagen häufig an sehr weiten Wegstrecken hunderte derartiger Sensoreinrichtungen installiert sind, ergibt sich bei herkömmlichen Förderanlagen, die ohne Funksensoren arbeiten, ein außerordentlich großer Verkabelungsaufwand. Solche bekannten Förderanlagen sind außerdem sehr unflexibel, da die Sensoreinrichtungen nicht ohne weiteres umgesetzt bzw. nicht ohne weiteres neue Sensoreinrichtungen an neuen Stellen innerhalb der Förderanlage angebracht werden können.

Ein Materialfördersystem unter Verwendung von Funksensoren gemäß dem Oberbegriff des Anspruchs 1 geht aus der WO 97/ 09258 hervor. Hier wird ein auf einem Schienensystem fahrender Zug mit Lokomotive und kippbaren Anhängern von einem zentralen Rechner per Funkkontakt zwischen Beund Entladestationen geleitet. Dieser Rechner steuert auch den Vorgang des Be- und Entladens, wobei an den einzelnen Station IR-Sende- und Empfangseinrichtungen sowie Sensoren und Aktoren vorhanden sind, mit deren Hilfe lokal die übergeordneten Steuerbefehle auf Zulässigkeit überprüft und ggf. die Be- und Entladevorgänge bewirkt werden. Während die Signalübermittlung drahtlos erfolgt, gibt die WO 97/09258 keine Hinweise, daß auch bei der Energieversorgung der Sensoren und Aktoren auf Leitungen verzichtet werden kann.

Die DE 199 44 896 A1 zeigt ein Verfahren zur Ortung von Schienenfahrzeugen längs eines Schienenwegs mittels örtlich verteilt angeordneter Funksensoren, die ihre elektrische Hilfsenergie über Piezoelemente aus der beim Vorbeifahren des Schienenfahrzeugs frei werdenden mechanischen Energie beziehen und daher nur während dieser Zeit aktiv sein können. Außerhalb dieser Zeitspanne können also Informationen beispielsweise über die Stellung einer Weiche nicht übermittelt werden.

Aufgabe der vorliegenden Erfindung ist es, eine Förderanlage der eingangs genannten Art so auszugestalten, daß auf eine Verkabelung der Sensoren sowohl hinsichtlich der Datenübermittlung als auch der Energieversorgung komplett verzichtet werden kann und der Energieverbrauch in den Sensoren minimiert wird.

Diese Aufgabe wird erfindungsgemäß dadurch gelöst, daß
g) die Stromversorgungsquelle autark ist;
h) die mindestens eine Funksensoreinrichtung
   ha) normalerweise einen Schlummerzustand einnimmt, in dem die größten Stromverbraucher, insbesondere der Sender und der Empfänger, deaktiviert sind; und
   hb) einen Zeitgeber aufweist, der mit einer Wiederholfrequenz f₂ zumindest den Empfänger der Funksensoreinrichtung kurzzeitig aufweckt.

Bei der erfindungsgemäßen Förderanlage sind also die Stromversorgungsquellen autark. Unter einer "autarken" Stromversorgungsquelle wird eine solche verstanden, die keine Zuleitung elektrischer Energie über Versorgungskabel benötigt. Um die Stromversorgungsquelle nicht unnötig zu belasten, werden also alle größeren Stromverbraucher so lange wie möglich abgeschaltet und nur manchmal mittels eines periodisch arbeitenden Zeitgebers kurzzeitig aufgeweckt.

Im einfachsten Fall umfaßt eine derartige autarke Stromversorgungsquelle eine Batterie.

Wenn ein größerer Stromverbrauch oder ein längere Standzeit der autarken Stromversorgungsquelle benötigt werden, empfiehlt sich eine Ausgestaltung, bei welcher die Stromversorgungsquelle einen Energiespeicher, einen Generator, der aus der in der Umgebung vorhandenen Energie elektrische Energie erzeugt, und eine Energiemanagementschaltung umfaßt. In praktisch allen Fällen läßt sich der Umgebung, in welcher sich eine Funksensoreinrichtung befindet, Energie entnehmen, sei dies Wärme, Licht- oder mechanische Energie. Diese Energie wird mit Hilfe des Generators in elektrische Energie umgesetzt und zur Stützung des Energiespeichers eingesetzt. Der Energiespeicher kann eine Batterie, in manchen Fällen jedoch auch nur ein Kondensator mit sehr hoher Kapazität sein.

Besonders lange wartungsfreie Betriebszeiten der Funksensoreinrichtungen bei zugleich hoher Sicherheit der Datenübertragung lassen sich mit derjenigen Ausgestaltung der vorliegenden Erfindung erzielen, bei welcher die die Kommunikation zwischen dem Sender und dem Empfänger einerseits und der der Zentralsteuerung zugeordneten Sende/ Empfangseinrichtung andererseits in folgender Weise geschieht:
a) die Sende/Empfangseinrichtung sendet mit einer Wiederholfrequenz f₁ Broadcastimpulse aus, mit denen sie alle Sensoreinrichtungen gezielt adressieren und diesen Informationen übermitteln kann;
b) die Wiederholfrequenz f₂, mit welcher zumindest der Empfänger der Funksensoreinrichtung aufgeweckt wird, ist ein ganzzahliger Bruchteil der Wiederholfrequenz f₁ der Broadcastimpulse, und das Aufwecken erfolgt wähend des Auftretens eines Broadcastimpulses;
c) jede Funksensoreinrichtung weist eine Betriebsartensteuerung auf, welche alle schlummernden Stromverbraucher aufweckt, wenn während einer vom Zeitgeber bewirkten Aufweckzeit des Empfängers von der Sende/ Empfangseinrichtung ein entsprechendes Signal empfangen wird, und alle Stromverbraucher mindestens so lange wachhält, bis der Sensor ein Ereignis festgestellt hat.

Bei dieser Kommunikationsart zwischen den einzelnen Funksensoreinrichtungen und der Zentralsteuerung werden also alle größeren Stromverbraucher der Funksensoreinrichtungen so häufig wie möglich und so lange wie möglich abgeschaltet. Nur auf ein "Aufweck"-Broadcastsignal hin, welches von der Zentralsteuerung kommt, weckt die Betriebsartensteuerung der jeweils adressierten Funksensoreinrichtung die jeweiligen Stromverbraucher auf, so daß nunmehr bei vollem Energieverbrauch die Funksensoreinrichtung einsatzbereit ist. Ist das erwartete Ereignis von der fraglichen Funksensoreinrichtung festgestellt und über Funk an die Zentralsteuerung gemeldet worden, kann sie sofort oder nach einer kurzen Verzögerungszeit wieder in den Schlummerzustand zurückkehren. Diese Art der Kommunikation zwischen den einzelnen Funksensoreinrichtungen und der Zentralsteuerung ist nicht nur mit einem sehr geringen Energieverbrauch verbunden, die ggf. auch einen Betrieb über Jahre hinaus aus einer Batterie möglich macht. Zusätzlich ist, was gerade bei Förderanlagen von großer Bedeutung ist, eine hohe Sicherheit der Datenübertragung gegeben, so daß es nicht zu Fehlern bei der Datenübermittlung und hierdurch verursachten Betriebsstörungen der Förderanlage kommen kann.

Bei einer weiteren vorteilhaften Ausgestaltung der erfindungsgemäßen Förderanlage sendet die der Zentralsteuerung zugeordnete Sende/Empfangseinrichtung ein Aufweck-Broadcastsignal an eine bestimmte Sensoreinrichtung aus, nachdem der Eintritt eines Ereignisses festgestellt wurde, welches in der zeitlichen Abfolge dem Ereignis vorgeschaltet ist, das die jeweilige Sensoreinrichtung überwacht. Bei dieser Ausgestaltung wird also eine bestimmte Sensoreinrichtung von der Zentralsteuerung dann aufgeweckt, wenn dieser ein Ereignis gemeldet ist, welches zeitlich dem durch die Sensoreinrichtung überwachten Ereignis vorangeht. So kann beispielsweise eine Sensoreinrichtung dann aufgeweckt werden, wenn der zu fördernde Gegenstand eine bestimmte in Förderrichtung "stromauf" liegende Stelle passiert hat. Die Aktivierung der verschiedenen Funksensoreinrichtungen kann auf diese Weise voll automatisch geschehen und findet nur dann statt, wenn die fragliche Funksensoreinrichtung tatsächlich benötigt wird. Zu allen anderen Zeiten verbleibt diese Funksensoreinrichtung im Schlummerzustand, in dem sie nur sehr wenig Energie verbraucht.

Zweckmäßig ist dabei, wenn die Sende/Empfangseinrichtung das Aufweck-Broadcastsignal erst dann aussendet, wenn nach dem Eintritt des vorgeschalteten Ereignisses eine bestimmte Verzögerungszeit verstrichen ist. In vielen Fällen findet das "vorgeschaltete" Ereignis, also im erwähnten Beispiel das Passieren des transportierten Gegenstands an einer "stromauf" liegenden Stelle des Förderwegs, so lange vor dem Zeitpunkt, zu dem die Betriebsbereitschaft der jeweiligen Funksensoreinrichtung benötigt wird, daß mit dem Aufweck-Broadcastsignal der Sende/ Empfangseinrichtung noch eine bestimmte Zeit zugewartet werden kann. Selbstverständlich muß aber das Aufwecken der jeweiligen Funksensoreinrichtungen so rechtzeitig geschehen, daß die Ansprechzeiten der verschiedenen Komponenten der Förderanlage berücksichtigt sind.

Eine besonders hohe Betriebssicherheit wird bei derjenigen Ausführungsform der Erfindung erzielt, bei welcher die Zentralsteuerung ein Alarmsignal erzeugt, wenn die Sensoreinrichtung nach Ablauf der Verzögerungszeit und nach Ablauf einer an diese angehängten Überwachungszeit kein den Eintritt des erwarteten Ereignisses anzeigendes Signal ausgesandt hat. Wenn also die jeweils betrachtete Funksensoreinrichtung innerhalb eines Zeitraums, der bei normalem Geschehensablauf seit dem "vorgeschalteten" Ereignis bis zum Eintritt des erwarteten Ereignisses verstreichen darf, kein entsprechendes Signal ausgesandt hat, geht die Zentralsteuerung von einer Betriebsstörung aus, die Notmaßnahmen erfordert. Eine derartige Notmaßnahme kann in der Stillsetzung der gesamten Förderanlage bestehen.

Ebenfalls zur Erhöhung der Betriebssicherheit kann die erfindungsgemäße Förderanlage so ausgestaltet sein, daß der Zeitgeber während der periodischen kurzzeitigen Aktivierung des Empfängers gleichzeitig den Sender weckt und dieser dabei ein Funksignal aussendet und daß die Zentralsteuerung ein Alarmsignal abgibt, wenn seit dem Empfang des letzten Funksignals von einer Sensoreinrichtung die normale Zeit zwischen zwei derartigen Signalen zzgl. einer Überwachungszeit verstrichen ist. Auf diese Weise werden die Funktionsfähigkeit der Sensoreinrichtungen und diejenige der Funkstrecke zwischen Sensoreinrichtung und Sende/Empfangseinrichtung der Zentralsteuerung überwacht. Bleibt von einer Sensoreinrichtung innerhalb einer bestimmten Zeit ein Funksignal aus, geht die Zentralsteuerung von einer Betriebsstörung aus, die z. B. von einem defekten Bauteil der Funksensoreinrichtung herrühren kann. Auch in diesem Fall wird ein Alarmsignal erzeugt und ggf. eine Notmaßnahme eingeleitet.

Bei sehr großen Förderanlagen empfiehlt sich eine Ausführungsform, bei welcher die Sensoreinrichtungen in Gruppen räumlich benachbarter Funksensoreinrichtungen unterteilt sind, die jeweils über Funk mit einem Funkdatenkonzentrator kommunizieren, wobei die Funkdatenkonzentratoren über einen Datenbus mit der Zentralsteuerung kommunizieren. Auf diese Weise läßt sich mit geringer Sendeleistung eine hohe Sicherheit der Datenübertragung gewährleisten.

Dabei können die Funkdatenkonzentratoren sowie die Aktoren als Feldbus-Slaves an einen Feld-Datenbus geschaltet sein.

Ausführungsbeispiele der Erfindung werden nachfolgend anhand der Zeichnung näher erläutert; es zeigen
- Figur 1: schematisch einen Ausschnitt aus einem Rollenbahnfördersystem;
- Figur 2: ein Blockschaltbild der Steuerungsschaltung des Rollenbahnfördersystems von Figur 1;
- Figur 3: das Blockschaltbild der Sensorsteuerschaltung;
- Figur 4: das Blockschaltbild einer Ausführungsform, bei welcher die Funkdatenkonzentratoren und die Motoren des Ausführungsbeispiels von Figur 1 als ASI-Slaves an einen ASI-Bus geschaltet sind.

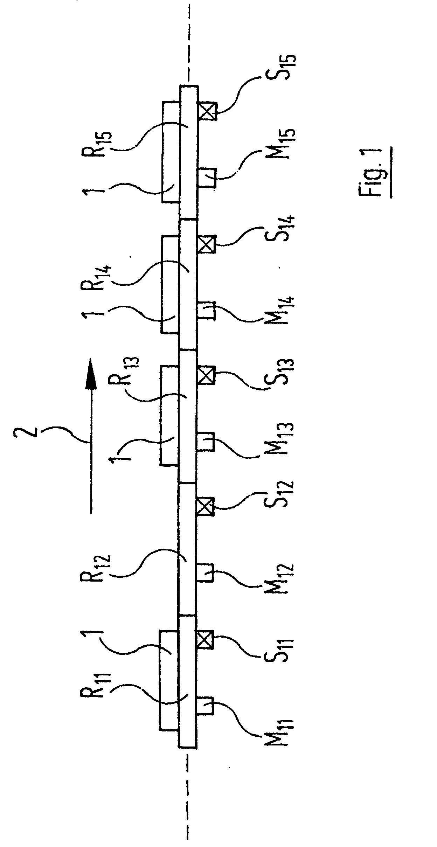

Das in Figur 1 ausschnittsweise dargestellte Rollenbahnförderyystem setzt sich aus einzelnen Rollenbahnen 1 zusammen, die in Figur 1 schematisch als schmale horizontale Rechtecke dargestellt sind. Sie umfassen jeweils in bekannter Weise eine Vielzahl von nicht dargestellten Rollen, deren Drehachsen senkrecht zur Zeichenebene von Figur 1 verlaufen und die gemeinsam eine Förderebene definieren. Alle oder ein Teil dieser Rollen ist durch einen Motor M₁₁ bis M₁ₙ angetrieben.

Die Rollenbahnen R₁₁ bis R₁ₙ transportieren Skids 1, welche eine Last, z. B. eine Fahrzeugkarosserie tragen, in Richtung des Pfeils 2.

Jeder Rollenbahn R₁₁ bis R₁ₙ ist eine Sensoreinrichtung S₁1 bis S₁n zugeordnet. Diese erzeugt ein Steuersignal, wenn sie die Anwesenheit eines Skids 1 in ihrer Nähe erfaßt. Dieses Steuersignal kann beispielsweise dazu verwendet werden, den Motor M₁₁ bis M₁ₙ der zugehörigen Rollenbahn R₁₁ bis R₁ₙ stillzusetzen und so den Weitertransport des jeweiligen Skids 1 zu unterbinden.

Das gesamte Wegesystem des Rollenbahnfördersystems ist in mehrere Abschnitte unterteilt. In Figur 1 ist ein Ausschnitt aus dem Abschnitt 1 dargestellt, was sich durch den führenden Index bei den Bezugszeichen R, M und S niederschlägt. Der zweite Index der Bezugszeichen R, M und S bezieht sich auf die laufende Nummer des jeweiligen Gegenstands in dem jeweiligen Abschnitt. R₁₁ ist demzufolge beispielsweise die Rollenbahn Nr. 1 im Abschnitt 1.

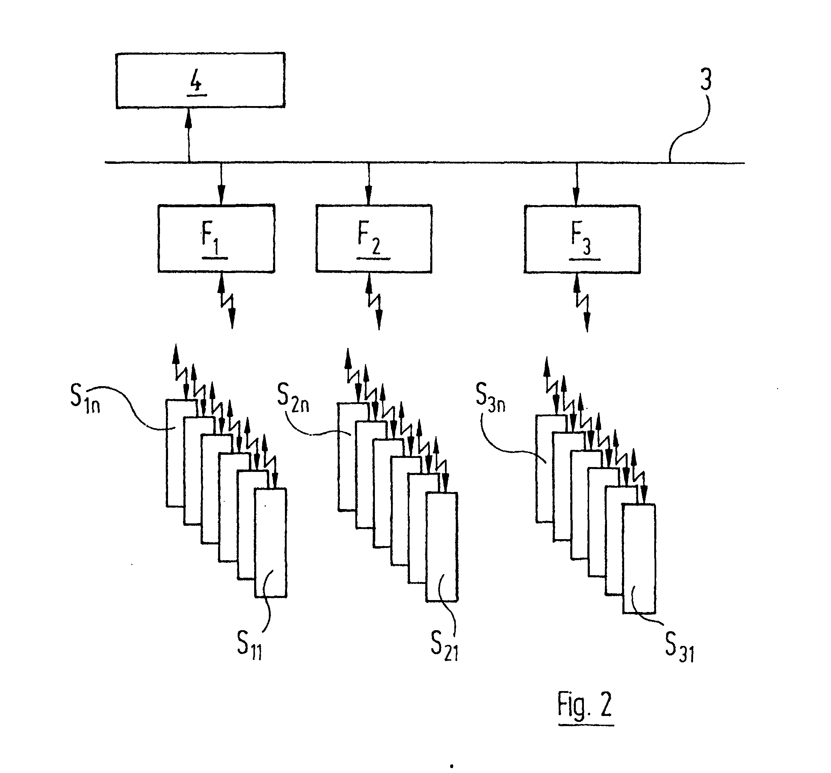

Die Steuerschaltung, mit welcher das Rollenbahnsystem betrieben wird, ist als Blockschaltbild in Figur 2 für drei Abschnitte dargestellt. Die zu den drei Abschnitten gehörenden Sensoreinrichtungen S₁₁ bis S₁ₙ, S₂₁ bis S₂ₙ und S₃₁ bis S₃ₙ sind jeweils gruppenweise zusammengefaßt und als senkrechtstehende Rechtecke symbolisiert. Alle Sensoreinrichtungen S sind als Funksensoreinrichtungen ausgestaltet, d.h., sie kommunizieren mit der Zentralsteuerung 4 des Rollenbahnförderers über Funk. Dies bedeutet, daß zur Signalübermittlung von den und zu den Sensoreinrichtungen S keine Verkabelung erforderlich ist. Darüber hinaus ist jede Sensoreinrichtung S mit einer eigenen autarken Stromversorgungsquelle versehen, so daß auch zur Energiezufuhr keine Verkabelung notwendig ist. Um eine langdauernde, über Jahre hinweg zuverlässige Funktion der Sensoreinrichtungen S zu ermöglichen, wird ihr Energieverbrauch auf eine Weise, die später näher erläutert wird, minimiert.

Die Sensoreinrichtungen S kommunizieren abschnittsweise mit jeweils einem Funkdatenkonzentrator F₁, F₂, F₃, die. jeweils über einen Datenbus 3 mit der Zentralsteuerung 4 in Verbindung stehen.

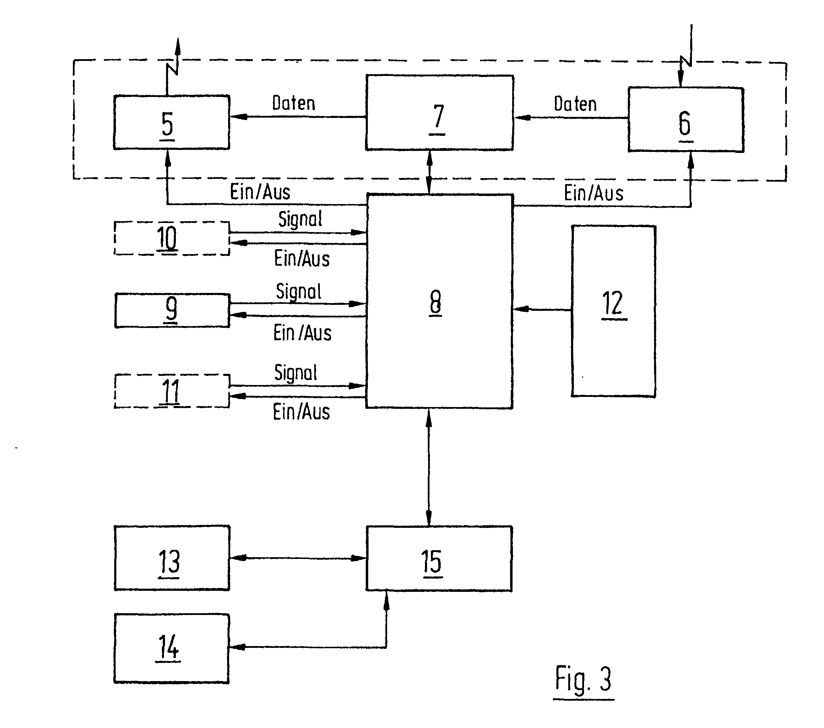

Die Sensorsteuerschaltungen sind alle identisch ausgeführt. Ein Blockschaltbild hiervon findet sich in Figur 3:

Jede Sensorsteuerschaltung umfaßt einen Sender 5, der in der Lage ist, Signale an den zugeordneten Funkdatenkonzentrator F zu übermitteln, sowie einen Empfänger 6, der von dem entsprechenden Funkdatenkonzentrator F Funksignale empfangen kann. Eine Funkdialogsystemsteuerung 7 bestimmt das Protokoll der Datenübertragung und steht mit einer Betriebsartensteuerung 8 in Verbindung. Letztere wiederum erhält über eine Signalleitung Signale von dem eigentlichen, die Anwesenheit eines Skids feststellenden Sensor 9. Befinden sich in unmittelbarer Nähe noch weitere Sensoren 10, 11, deren Funktion im vorliegenden Zusammenhang uninteressant ist, können diese an dieselbe Betriebsartensteuerung 8 angeschlossen werden, wie dies in Figur 3 gestrichelt dargestellt ist.

Ein Timer 12, der mit der Betriebsartensteuerung 8 verbunden ist, sorgt für die zeitliche Steuerung der gesamten Sensorsteuerschaltung.

Eine Batterie 13 ist ebenso wie ein Stromgenerator 14 mit einer Energiemanagementschaltung 15 verbunden. Der Stromgenerator 14 erzeugt in hier nicht näher interessierender Weise aus der unmittelbaren Umgebung der jeweiligen Sensoreinrichtung S elektrische Energie, welche von der Energiemanagementschaltung 15 zur Stützung der Batterie 13 und/oder zum direkten Betrieb der Sensorsteuerschaltung verwendet wird.

Die einzelnen Sensoreinrichtungen S kommunizieren mit ihren jeweils zugeordneten Funkdatenkonzentratoren F in folgender Weise:

Jeder Funkdatenkonzentrator F sendet mit einer bestimmten, verhältnismäßig hohen Wiederholfrequenz f₁, z.B. alle 25 Millisekunden, einen kurzen Funkimpuls aus, der "Broadcastimpuls" genannt wird. Der Funkdatenkonzentrator F kann mit Hilfe des Broadcastimpulses jede Sensoreinrichtung S in seinem Abschnitt gezielt adressieren.

Innerhalb der Sensorsteuerschaltung von Figur 3 sind der Sender 5, der Empfänger 6 und gegebenenfalls die Sensoren 9, 10, 11 diejenigen Bauteile, welche den größten Energieverbrauch haben. Um gezielt deren mittleren Energieverbrauch zu senken, ist die Betriebsartensteuerung 8 so ausgelegt, daß normalerweise all diese Komponenten abgeschaltet sind und "schlummern". Der Timer 12 sorgt jedoch dafür, daß in bestimmten Zeitabständen, die ein Vielfaches der Zeit zwischen zwei Broadcastimpulsen betragen können, der Empfänger 6 während der Dauer eines Broadcastimpulses kurzzeitig aufgeweckt wird. Detektiert der Empfänger 6 jetzt ein an die jeweilige Sensoreinrichtung S adressiertes Aufweck-Broadcastsignal, so weckt die Betriebsartensteuerung 8 über die in Figur 3 dargestellten Ein-Aus-Leitungen nunmehr auch den Sender 5 sowie den Sensor 9 und ggfs. die Sensoren 10, 11 auf.

Der Funkdatenkonzentrator F sendet dieses Aufweck-Broadcastsignal dann aus, wenn ein Ereignis eingetreten ist, welches demjenigen Ereignis im logischen und zeitlichen Ablauf vorgeschaltet ist, welches mit der betrachteten Sensoreinrichtung S erfaßt werden soll. Gegebenenfalls kann das Aufweck-Broadcastsignal des Funkdatenkonzentrators F mit einer geeigneten zeitlichen Verzögerung nach dem "vorgeschalteten" Ereignis ausgestrahlt werden.

Ein Beispiel für ein derartiges "vorgeschaltetes" Ereignis ist folgendes: Es sei in Figur 1 die Sensoreinrichtung S₁₂ betrachtet, deren zugeordnete Rollenbahn R₁₂ leer ist. Sie hat die Aufgabe, den in Richtung des Pfeiles 2 auf der Rollenbahn R₁₁ zugeförderten Skid 1 anzuhalten, wenn er sich auf der Rollenbahn R₁₂ befindet, da die nachfolgende Rollenbahn R₁₃ durch einen Skid 1 belegt ist. Das "vorgeschaltete" Ereignis kann in diesem Falle das Einschalten des Motors M₁₁ sein. Dieses Ereignis muß zwangsläufig stattgefunden haben, damit eine Funktion des Sensors S₁₂ überhaupt erforderlich wird. So lange der Motor M₁₁ nicht zu laufen begonnen hat, ist die Aktivierung der Sensoreinrichtung S₁₂ nicht notwendig; diese kann daher im Schlummerzustand verbleiben.

Die Sensoreinrichtung S₁₂ braucht aber nicht sofort bei Inbetriebnahme des Motors M₁₁ geweckt zu werden, da ja der Skid 1 eine gewisse Zeit benötigt, um die Rollenbahnen R₁₁ und R₁₂ bis in die Nähe der Sensoreinrichtung S₁₂ zu durchlaufen. Die Aktivierung der Sensoreinrichtung S₁₂ erfolgt daher um eine gewisse Verzögerungszeit später als die Aktivierung des Motors M₁₁. Diese Verzögerungszeit entspricht der Fahrtzeit des Skids 1 auf der entsprechenden Strecke, abzüglich einer gewissen Sicherheitszeit, die durch die Ansprechzeiten der verschiedenen Anlagenkomponenten bestimmt ist. Außerdem muß die Verzögerungszeit so gewählt werden, daß eine Überwachungszeit ("Aktiv-Watchdog") eingerichtet werden kann, deren Funktion weiter unten erläutert wird.

Wenn die Sensorsteuerschaltung der jeweiligen Sensoreinrichtung S in der oben beschriebenen Weise vollständig aufgeweckt wurde, überwacht der jeweilige Sensor 9 das Eintreten des erwarteten Ereignisses, im dargestellten Beispiel also die Annäherung des Skids 1 auf der Rollenbahn R₁₂. Bei jedem vom Funkdatenkonzentrator F ausgestrahlten Broadcastsignal wird die jeweilige Sensoreinrichtung S abgefragt, ob das erwartete Ereignis eingetreten ist. Ist dies der Fall, so wird das Vorliegen des fraglichen Ereignisses per Funk an den entsprechenden Funkdatenkonzentrator F und von diesem über den Datenbus 3 an die zentrale Steuerung 4 gemeldet, die dann die erforderlichen Steuervorgänge einleitet. Nach einer gewissen Zeitverzögerung schlummert dann die jeweilige Sensoreinrichtung S wieder ein.

Der Empfang eines Broadcastsignales durch die Sensoreinrichtung S wird von dieser durch ein geeignetes Signal an den Funkdatenkonzentrator F quittiert; in gleicher Weise wird der Empfang eines Signales der Sensoreinrichtung S durch den Funkdatenkonzentrator F durch ein geeignetes an die Sensoreinrichtung S ausgesandtes Signal quittiert.

Die korrekte Funktion aller Sensoreinrichtungen S und der entsprechenden Funkstrecken wird durch den jeweiligen Funkdatenkonzentrator F in folgender Weise kontrolliert:

Zum einen überwacht der Funkdatenkonzentrator F das periodische "Aufwecken" der Empfänger 6 durch Einrichten einer Überwachungszeit ("Schlummer-Watchdog"). Tritt nach einem das kurzzeitige Aufwachen der Sensoreinrichtung S anzeigenden Signal innerhalb dieser Überwachungszeit nicht ein weiteres derartiges Signal auf, so wird dies als Systemfehler interpretiert und eine Notmaßnahme, z.B. ein Nothalt des Rollenfördersystemes veranlaßt.

In ähnlicher Weise wird überwacht, ob die Sensoreinrichtung S nach Ablauf der oben erwähnten Verzögerungszeit nach Eintritt des "vorgeschalteten" Ereignisses tatsächlich aufwacht. Hierzu wird an die vorgegebene Verzögerungszeit die oben bereits erwähnte Überwachungszeit ("Aktiv-Watchdog") angehängt. Hat die fragliche Sensoreinrichtung S nicht spätestens innerhalb dieser angehängten Überwachungszeit signalisiert, daß das erwartete Ereignis eingetreten ist, wird auch dies als Systemfehler interpretiert mit der Folge, daß eine Notmaßnahme, z.B. ein Nothalt, ausgelöst wird.

Die beschriebene Schaltungsanordnung arbeitet mit hoher Datensicherheit, gleichzeitig jedoch wegen der nur kurzen Einschaltphasen insbesondere der großen Energieverbraucher in den Sensorsteuerschaltungen sehr energiesparend. Auf diese Weise ist es möglich, die Sensoreinrichtungen S ohne jede Verkabelung zu betreiben, weder zur Datenübertragung noch zur Energieversorgung.

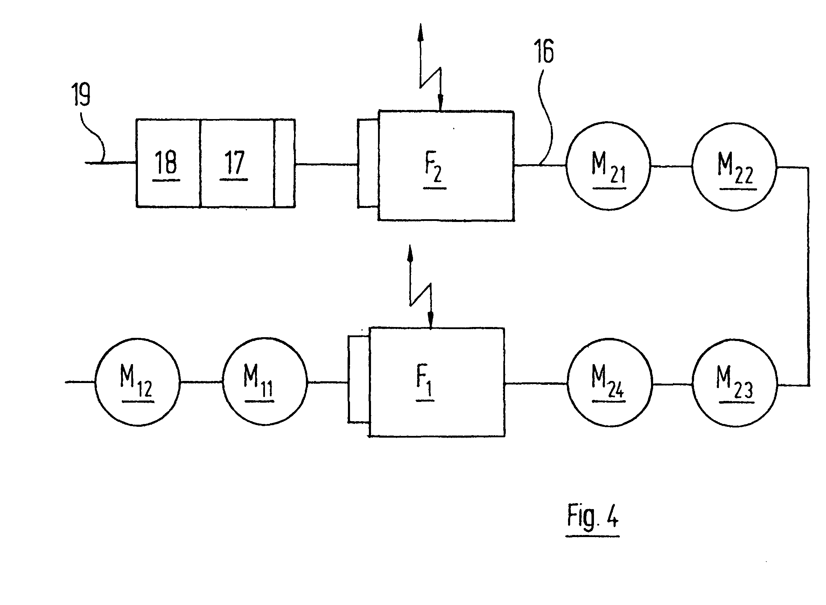

In Figur 4 ist als Blockschaltbild eine besondere Art der Anschaltung der zu verschiedenen Abschnitten gehörenden Funkdatenkonzentratoren F₁ und F₂ an verschiedene Aktoren, z.B. Motoren M₁₁, M₁₂ bzw. M₂₁, M₂₂, M₂₃ und M₂₄ dargestellt. Die Verbindung erfolgt über einen ASI-Bus 16. Die Funkdatenkonzentratoren F₁ und F₂ sind als ASI-Slaves eines ASI-Masters 17 geschaltet, der seinerseits über einen Standardbus-Slave 18 mit einem Standardbus 19 verbunden ist. Alle Funkteilnehmer können somit an jeder Stelle der Gesamtanlage eingebunden werden. Jeder Funkdatenkonzentrator F kann dabei je nach Leistungsfähigkeit der Funkstrecke und zulässiger Verzögerungszeit 8 bis etwa 32 Teilnehmer versorgen.

## Patentansprüche

1. Förderanlage zum Transport von Gegenständen mit
a) einem mechanischen Fördersystem, welches die Gegenstände auf einem Wegesystem bewegt;
b) einer Mehrzahl von Sensoreinrichtungen (S), die ihrerseits aufweisen:
ba) mindestens einen Sensor (9, 10, 11), der einen in seiner Umgebung vorliegenden physikalischen Parameter erfaßt;
bb) eine Schaltungsanordnung (8), welche die vom Sensor gelieferten Signale in verarbeitbare elektrische Signale umsetzt;
c) einer Mehrzahl von Aktoren, insbesondere Motoren (M);
d) einer Zentralsteuerung (4), welcher die von den Sensoreinrichtungen (S) erzeugten Signale zugeführt werden und welche danach die Aktoren steuert,
wobei
e) mindestens eine der Sensoreinrichtungen (S) als Funksensoreinrichtung ausgestaltet ist und hierzu einen Sender (5), einen Empfänger (6) und eine Stromversorgungsquelle (13, 14, 15) aufweist;
f) die Zentralsteuerung (4) mit mindestens einer Sende/ Empfangseinrichtung (F) in Datenverbindung steht, welche mit dem Sensor (5) und dem Empfänger (6) jeder Sensoreinrichtung (S) über Funk kommuniziert,
**dadurch gekennzeichnet, daß**
g) die Stromversorgungsquelle (13, 14, 15) autark ist;
h) die mindestens eine Funksensoreinrichtung (S)
ha) normalerweise einen Schlummerzustand einnimmt, in dem die größten Stromverbraucher, insbesondere der Sender (5) und der Empfänger (6), deaktiviert sind; und
hb) einen Zeitgeber (12) aufweist, der mit einer Wiederholfrequenz f₂ zumindest den Empfänger (6) der Funksensoreinrichtung (S) kurzzeitig aufweckt.

2. Förderanlage nach Anspruch 1, **dadurch gekennzeichnet, daß** die Stromversorgungsquelle eine Batterie (13) umfaßt.

3. Förderanlage nach Anspruch 1 oder 2, **dadurch gekennzeichnet, daß** die Stromversorgungsquelle einen Energiespeicher (13), einen Generator (14), der aus der in der Umgebung vorhandenen Energie elektrische Energie erzeugt, und eine Energiemanagementschaltung (15) umfaßt.

4. Förderanlage nach einem der vorhergehenden Ansprüche, **dadurch gekennzeichnet, daß** die Kommunikation zwischen dem Sender (5) und dem Empfänger (6) der Sensoreinrichtung (S) einerseits und der der Zentralsteuerung (4) zugeordneten Sende/ Empfangseinrichtung (F) andererseits in folgender Weise geschieht:
a) die Sende/Empfangseinrichtung (F) sendet mit einer Wiederholfrequenz f₁ Broadcastimpulse aus, mit denen sie alle Sensoreinrichtungen (S) gezielt adressieren und diesen Informationen übersenden kann;
b) die Wiederholfrequenz f₂, mit welcher zumindest der Empfänger (6) der Funksensoreinrichtung (S) aufgeweckt wird, ist ein ganzzahliger Bruchteil der Wiederholfrequenz f₁ der Broadcastimpulse, und das Aufwecken erfolgt während des Auftretens eines Broadcastimpulses;
c) jede Funksensoreinrichtung (S) weist eine Betriebsartensteuerung (8) auf, welche alle schlummernden Stromverbraucher aufweckt, wenn während einer vom Zeitgeber (12) bewirkten Aufweckzeit des Empfängers (6) von der Sende/Empfangseinrichtung (F) ein entsprechendes Signal empfangen wurde, und alle Stromverbraucher mindestens so lange wachhält, bis der Sensor (9, 10, 11) ein Ereignis festgestellt hat.

5. Förderanlage nach Anspruch 4, **dadurch gekennzeichnet,**
**daß** die der Zentralstation (4) zugeordnete Sende/Empfangseinrichtung (F) ein Aufweck-Broadcastsignal an eine bestimmte Sensoreinrichtung (S) aussendet, nachdem der Eintritt eines Ereignisses festgestellt wurde, welches in der zeitlichen Abfolge dem Ereignis vorgeschaltet ist, das die jeweilige Sensoreinrichtung (S) überwacht.

6. Förderanlage nach Anspruch 5, **dadurch gekennzeichnet,**
**daß** die Sende/Empfangseinrichtung (F) das Aufweck-Broadcastsignal aussendet, wenn nach dem Eintritt des vorgeschalteten Ereignisses eine bestimmte Verzögerungszeit verstrichen ist.

7. Förderanlage nach Anspruch 6, **dadurch gekennzeichnet,**
**daß** die Zentralsteuerung (4) ein Alarmsignal erzeugt, wenn die Sensoreinrichtung (S) nach Ablauf der Verzögerungszeit und nach Ablauf einer an diese angehängten Überwachungszeit kein den Eintritt des erwarteten Ereignisses anzeigendes Signal ausgesandt hat.

8. Förderanlage nach einem der vorhergehenden Ansprüche,
**dadurch gekennzeichnet, daß** der Zeitgeber (12) während der periodischen kurzzeitigen Aktivierung des Empfängers (6) gleichzeitig den Sender (5) weckt und dieser dabei ein Funksignal aussendet und daß die Zentralsteuerung (4) ein Alarmsignal abgibt, wenn seit dem Empfang des letzten Funksignals von einer Sensoreinrichtung (S) die normale Zeit zwischen zwei derartigen Signalen zuzüglich einer Überwachungszeit verstrichen ist.

9. Förderanlage nach einem der vorhergehenden Ansprüche,
**dadurch gekennzeichnet, daß** die Sensoreinrichtungen (S) in Gruppen räumlich benachbarter Sensoreinrichtungen (S₁, S₂, S₃) unterteilt sind, die jeweils über Funk mit einem Funkdatenkonzentrator (F₁, F₂, F₎ kommunizieren, wobei die Funkdatenkonzentratoren (F₁, F₂, F₃) über einen Datenbus (3; 16, 19) mit der Zentralsteuerung (4) kommunizieren.

10. Förderanlage nach Anspruch 9, **dadurch gekennzeichnet,**
**daß** die Funkdatenkonzentratoren (F₁, F₂, F₃) sowie die Aktoren (M) als Feldbus-Slaves an einen Feld-Datenbus (16) geschaltet sind.

## Claims

1. Conveyor system for the transport of objects with
a) a mechanical conveyor, which moves the objects on a track system;
b) a plurality of sensor devices (S), which for their part have:
ba) at least one sensor (9, 10, 11), which picks up a physical parameter present in its environment;
bb) a switching circuit (8), which converts the signals fed by the sensor into processable electrical signals;
c) a plurality of actuators, in particular motors (M);
d) a central control (4), to which the signals produced by the sensor devices (S) are fed and which controls the actuators accordingly,
whereby
e) at least one of the sensor devices (S) is configured as radio sensor device and for this purpose has a transmitter (5), a receiver (6) and an electrical power supply (13, 14, 15);
f) the central control (4) has a data connection to at least one transmitter/receiver (F), that communicates by radio with the sensor (5) and the receiver (6) in each sensor device (S).
**characterized in that**
g) the electrical power supply (13, 14, 15) is autonomous;
h) the at least one radio sensor device (S)
ha) normally assumes a sleep state in which the greatest power consumers, particularly the transmitter (5) and the receiver (6) are deactivated; and
hb) has a timer (12), which at a repeat frequency f₂ temporarily wakes up at least the receiver (6) of the radio sensor device (S).

2. Conveyor system according to Claim 1, **characterized in that** the electrical power supply comprises a battery (13).

3. Conveyor system according to Claim 1 or 2, **characterized in that** the electrical power supply comprises an energy storage (13), a generator (14), which produces electrical energy from the energy existing in the environment, and a power management system (15).

4. Conveyor system according to any one of the preceding claims, **characterized in that** communication between the transmitter (5) and the receiver (6) of the sensor device (S) on the one hand and the transmitter/receiver (F) assigned to the central control (4) on the other hand happens in the following way:
a) the transmitter/receiver (F) transmits broadcast impulses at a repeat frequency f₁, with which it can systematically address all sensor devices (S) and send these information;
b) the repeat frequency f₂, at which at least the receiver (6) of the radio sensor device (S) is woken up, is an integral fraction of the repeat frequency f₁ of the broadcast impulses, and the wakening up takes place during the occurrence of a broadcast impulse;
c) each radio sensor device (S) exhibits a mode of operation control (8), which wakes up all sleeping power consumers, if during one of the wake-up periods of the receiver (6) produced by the timer (12) a corresponding signal was received from the transmitter/receiver (F), and which keeps awake all power consumers at least until the sensor (9, 10, 11) has detected an incident.

5. Conveyor system according to Claim 4, **characterized in that** the transmitter/receiver (F) assigned to the central station (4) emits a wake-up broadcast signal to a specific sensor device (S), after the occurrence of an incident has been detected, which in the sequence of time happens before the incident, that the respective sensor device (S) monitors.

6. Conveyor system according to Claim 5, **characterized in that** the transmitter/receiver (F) emits the wake up broadcast signal, if a certain delay time has elapsed after the occurrence of the incident happening beforehand.

7. Conveyor system according to Claim 6, **characterized in that** the central control (4) produces an alarm signal, if the sensor device (S) has not emitted any signal indicating the occurrence of the expected incident after the delay time has expired and after a monitoring period dependent on this has expired.

8. Conveyor system according to any one of the preceding claims, **characterized in that** the timer (12) during the periodic brief activation of the receiver (6) at the same time wakes the transmitter (5) and this as a result emits a radio signal and that the central control (4) emits an alarm signal, if the normal time between two such signals plus a monitoring period has elapsed since the receipt of the last radio signal from a sensor device (S).

9. Conveyor system according to any one of the preceding claims, **characterized in that** the sensor devices (S) are divided into groups of adjacently arranged sensor devices (S₁, S₂, S₃), which in each case communicate by radio with a radio data concentrator (F₁, F₂, F [*sic*]), whereby the radio data concentrators (F₁, F₂, F₃) communicate via a data bus (3; 16, 19) with the central control (4).

10. Conveyor system according to Claim 9, **characterized in that** the radio data concentrators (F₁, F₂, F₃) as well as the actuators (M) are connected as field bus slaves to a field data bus (16).

## Revendications

1. Installation de transport pour le transport d'objets comprenant
a) un système de transport mécanique qui déplace les objets sur un système de voies ;
b) une pluralité de dispositifs capteurs (S) qui présentent eux-mêmes :
ba) au moins un capteur (9, 10, 11) qui saisit un paramètre physique présent dans son environnement ;
bb) un circuit (8) qui convertit les signaux délivrés par le capteur en signaux électriques pouvant faire l'objet d'un traitement ;
c) une pluralité d'actionneurs, en particulier de moteurs (M) ;
d) une commande centrale (4) à laquelle sont fournis les signaux générés par les capteurs et qui commande ensuite les actionneurs,
dans laquelle
e) au moins un des dispositifs capteurs (S) est un dispositif capteur par radio et présente à cet effet un émetteur (5), un récepteur (6) et une source d'alimentation électrique (13, 14, 15) ;
f) la commande centrale (4) est en liaison avec au moins un dispositif d'émission/réception (F) qui communique par radio avec l'émetteur (5) et le récepteur (6) de chaque dispositif capteur (S),
**caractérisée par le fait que**
g) la source d'alimentation électrique (13, 14, 15) est autonome ;
h) le ou les dispositif(s) capteur(s) (S)
ha) est/sont normalement dans un état de sommeil dans lequel les principaux consommateurs de courant, en particulier l'émetteur (5) et le récepteur (6), sont désactivés ; et
hb) présente(nt) une horloge (12) qui réveille brièvement au moins le récepteur (6) du dispositif capteur par radio (S) à une fréquence de répétition f₂.

2. Installation de transport selon la revendication 1, **caractérisée par le fait que** la source d'alimentation électrique comprend une batterie (13).

3. Installation de transport selon la revendication 1 ou 2, **caractérisée par le fait que** la source d'alimentation électrique comprend un accumulateur d'énergie (13), un générateur (14) qui génère de l'énergie électrique à partir de l'énergie présente dans l'environnement et un circuit de gestion de l'énergie (15).

4. Installation de transport selon l'une des revendications précédentes, **caractérisée par le fait que** la communication entre l'émetteur (5) et le récepteur (6) du dispositif capteur (S), d'une part, et le dispositif d'émission/réception (F) associé à la commande centrale (4), d'autre part, s'effectue de la manière suivante :
a) le dispositif d'émission/réception (F) envoie à une fréquence de répétition f₁ des impulsions de diffusion avec lesquelles il peut adresser de manière sélective tous les dispositifs capteurs (S) et leur envoyer des informations ;
b) la fréquence de répétition f₂ avec laquelle au moins le récepteur (6) du dispositif capteur par radio (S) est réveillé est une fraction entière de la fréquence de répétition f₁ des impulsions de diffusion et le réveil s'effectue pendant l'arrivée d'une impulsion de diffusion ;
c) chaque dispositif capteur par radio (S) présente une commande de mode de fonctionnement (8) qui réveille tous les consommateurs de courant endormis si le dispositif d'émission/réception (F) a reçu un signal correspondant pendant une période de réveil du récepteur (6) provoquée par l'horloge (12) et qui garde tous les consommateurs de courant éveillés au moins jusqu'à ce que le capteur (9, 10, 11) ait constaté un événement.

5. Installation de transport selon la revendication 4, **caractérisée par le fait que** le dispositif d'émission/réception (F) associé à la station centrale (4) envoie un signal de diffusion de réveil à un dispositif capteur (S) précis après qu'a été constatée l'arrivée d'un événement qui précède dans l'ordre chronologique l'événement que le dispositif capteur (S) concerné surveille.

6. Installation de transport selon la revendication 5, **caractérisée par le fait que** le dispositif d'émission/réception (F) envoie le signal de diffusion de réveil lorsqu'un temps de retard défini s'est écoulé après l'arrivée de l'événement précédent.

7. Installation de transport selon la revendication 6, **caractérisée par le fait que** la commande centrale (4) génère un signal d'alarme lorsque le dispositif capteur (S) n'a envoyé aucun signal indiquant l'arrivée de l'événement attendu après expiration du temps de retard et après expiration d'un temps de surveillance attaché à ce dernier.

8. Installation de transport selon l'une des revendications précédentes, **caractérisée par le fait que** pendant l'activation périodique de courte durée du récepteur (6) l'horloge (12) réveille en même temps l'émetteur (5), que celui-ci envoie un signal radio et que la commande centrale (4) délivre un signal d'alarme si, depuis la réception du dernier signal radio par un dispositif capteur (S), le temps normal entre deux signaux de ce genre plus un temps de surveillance est expiré.

9. Installation de transport selon l'une des revendications précédentes, **caractérisée par le fait que** les dispositifs capteurs (S) sont divisés en groupes de dispositifs capteurs (S1, S2, S3) physiquement voisins qui communiquent chacun par radio avec un concentrateur de données radio (F1, F2, F3), les concentrateurs de données radio (F1, F2, F3) communiquant avec la commande centrale (4) par un bus de données (3 ; 16, 19).

10. Installation de transport selon la revendication 9, **caractérisée par le fait que** les concentrateurs de données radio (F1, F2, F3) ainsi que les actionneurs (M) sont connectés en tant qu'esclaves de bus de terrain à un bus de données de terrain (16).
